# EUROPEAN PATENT SPECIFICATION

(11) **EP 3 081 399 B1**
(45) Date of publication and mention of the grant of the patent: **08.05.2019**
(21) Application number: 14851755.0
(22) Date of filing: 08.09.2014
(51) Int. Cl.: B60C 11/11, B60C 11/12, B60C 11/03

(54) **PNEUMATIC TIRE**
LUFTREIFEN
PNEUMATIQUE

(30) Priority: 09.10.2013 JP 2013212182
(43) Date of publication of application: 19.10.2016
(73) Proprietor: The Yokohama Rubber Co., Ltd., Minato-ku Tokyo 105-8685 (JP)
(72) Inventor: FURUSAWA, Hiroshi, Hiratsuka-shi Kanagawa 254-8601 (JP)
(74) Representative: Dilg, Haeusler, Schindelmann Patentanwaltsgesellschaft mbH
(86) International application number: PCT/JP2014/073650
(87) International publication number: WO 2015/053024

(56) References cited:
- EP-A1- 0 506 279
- EP-A1- 0 826 523
- EP-A2- 0 434 967
- WO-A1-2012/018081
- WO-A2-2012/091631
- DE-U1- 8 810 493
- JP-A- S6 418 707
- JP-A- 2010 285 040
- US-B1- 6 527 023

## Description

### Technical Field

The present invention relates to a pneumatic tire with improved braking performance and the like on ice.

### Background Art

Conventional techniques are known that improve performance (braking performance and driving performance) on ice of studless winter tires (for example, see International Publication No. WO/2010/032606). International Publication No. WO/2010/032606 discloses a pneumatic tire having a tread pattern in which a plurality of blocks is arranged close to each other into a gridlike shape.

### Summary of Invention

### Technical Problem

An anisotropic shape of blocks defined by grooves generally has a tendency to increase only drag force against external force in a specific direction and thus to improve a specific performance factor among tire performance factors. For example, if the shape of the blocks is anisotropic in the tire circumferential direction, drag force against external force in the tire circumferential direction is increased, thereby improving braking performance on ice. If the shape of the blocks is anisotropic in the tire width direction, drag force against external force in the tire width direction is increased, thereby improving turning performance on ice.

An anisotropic shape of grooves defining blocks has a tendency to improve water drainage performance. For example, if tire width directional grooves have a V-shape, the apex of the V-shape comes on the edge where a block defined by the grooves first contacts the ground (leading edge). This configuration efficiently discharges water from the grooves and thus improves water drainage performance.

In the pneumatic tire disclosed in International Publication No. WO/2010/032606, the shape of the blocks is not anisotropic in any directions. It is thus unclear if this pneumatic tire can exhibit braking performance and turning performance on ice and water drainage performance in a well-balanced manner.

Further prior art tires are known from the documents EP 0 826 523 A1, US 6 527 023 B1, WO 2012/091631 A2 and EP 0 506 279 A1.

In the light of the foregoing, it is an object of the present invention to provide a pneumatic tire especially with braking performance on ice, turning performance on ice, and water drainage performance improved in a well-balanced manner.

### Solution to Problem

A pneumatic tire according to the present invention is provided as defined in claim 1. A plurality of small blocks each having a contour consisting of four line segments is arranged while curving in a tire width direction to form medium blocks. The medium blocks are arranged in a plurality of rows in a tire circumferential direction to form large blocks. The large blocks are formed adjacent to the circumferential main groove in the tire circumferential direction on both sides in the tire width direction across the circumferential main groove.

### Advantageous Effects of Invention

The pneumatic tire according to the present invention has improved shapes of large blocks composed of a plurality of small blocks in predetermined shapes. The pneumatic tire having this configuration can improve especially braking performance on ice, turning performance on ice, and water drainage performance in a well-balanced manner.

### Brief Description of Drawings

- FIG. 1: is a plan view of a tread portion of a pneumatic tire according to an embodiment of the present invention.
- FIG. 2: is a magnified plan view of a circled area X of the tread portion illustrated in FIG. 1.
- FIG. 3: is a plan view of a tread portion of a pneumatic tire according to an embodiment of the present invention.
- FIG. 4: is a plan view of a tread portion of a conventional pneumatic tire.

### Description of Embodiment

Embodiments of the pneumatic tire according to the present invention (including a Basic Embodiment and Additional Embodiments 1 to 5) will now be described based on the drawings. Note that the present invention is not limited to these embodiments. The constituents of the embodiments include constituents that can be easily replaced by those skilled in the art and constituents that is substantially the same as the constituents of the embodiments. In addition, the various modes included in the embodiments can be combined as desired within the scope of obviousness by a person skilled in the art.

### Basic Embodiment

A basic embodiment of the pneumatic tire according to the present invention will now be described. In the following description, "tire radial direction" refers to a direction orthogonal to the axis of rotation of a pneumatic tire; "inside in the tire radial direction" refers to a side that is near to the axis of rotation in the tire radial direction; and "outside in the tire radial direction" refers to a side that is far from the axis of rotation in the tire radial direction. "Tire circumferential direction" refers to a circumferential direction with the axis of rotation as the center axis. "Tire width direction" refers to a direction parallel to the axis of rotation. "Tire equatorial plane CL" refers to a plane that is orthogonal to the rotational axis of the pneumatic tire and that passes through the center of the pneumatic tire in the tire width direction.

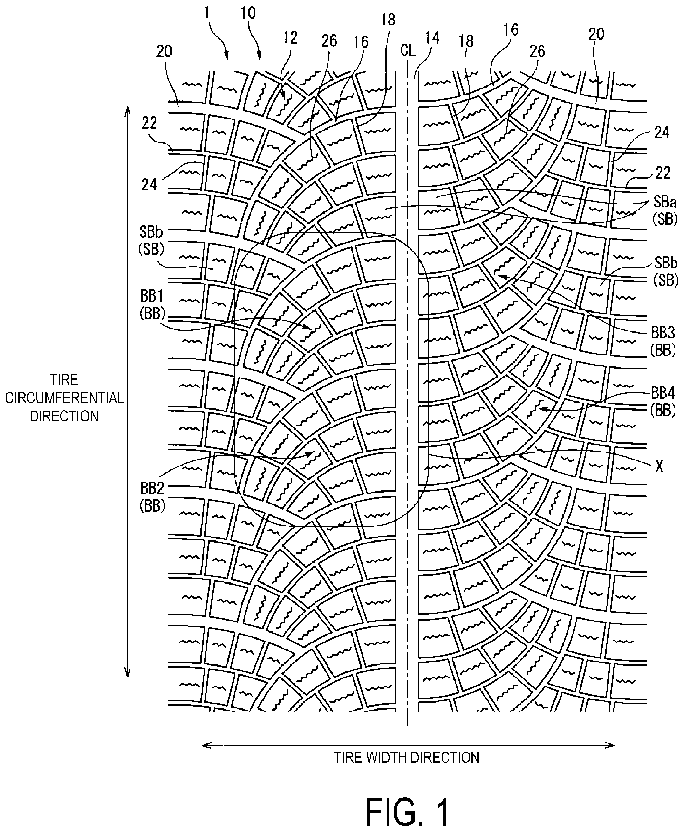

FIG. 1 is a plan view of a tread portion of a pneumatic tire according to an embodiment of the present invention (a view of a tire contacting the ground seen from above). The pneumatic tire exemplified in FIG. 1 has an undesignated rotational direction and has a tread pattern with point symmetry on the left and right sides of the paper with respect to a tire equatorial plane CL (each point on the plane) illustrated in FIG. 1. The tread pattern exemplified in FIG. 1 extends between both ground contact edges (not illustrated).

The tread portion 10 of the pneumatic tire 1 is formed from a rubber material (tread rubber) and is exposed on the outermost side in the tire radial direction of the pneumatic tire 1, and the surface thereof constitutes the contour of the pneumatic tire 1. The surface of the tread portion 10 forms a tread surface 12 constituting the surface that contacts the road surface when a vehicle (not illustrated) upon which the pneumatic tire 1 is mounted is traveling.

As illustrated in FIG. 1, the tread surface 12 is provided with a circumferential main groove 14 extending in the tire circumferential direction, curved grooves 16 inclining with respect to the tire circumferential direction and curving, first inclined grooves 18 communicating with both of the adjacent curved grooves 16, lug grooves 20 extending substantially in the tire width direction and curving, thin lug grooves 22 formed between the adjacent lug grooves 20, and second inclined grooves 24 communicating with both of the adjacent thin lug grooves 22. These grooves define a plurality of small blocks SB and form the tread pattern illustrated in FIG. 1. The specific configurations of the grooves 14 to 24 are as follows.

The circumferential main groove 14 is a main groove extending in the tire circumferential direction with the tire equatorial plane CL being the center line in the width direction. The circumferential main groove has a groove width of 4.0 mm or greater and a groove depth of 7.0 mm or greater. The groove width indicates the maximum dimension measured in the direction orthogonal to the extending direction of the groove, and this is applicable to the groove widths of other grooves described below. The groove depth indicates the maximum dimension measured from the profile line on the surface, assuming that there is no groove, in the tire radial direction, and this is applicable to the groove depths of other grooves described below.

The curved grooves 16 extend from the circumferential main groove 14, incline with respect to the tire circumferential direction, and are curved. The curves of the curved grooves 16 exemplified in FIG. 1 protrude upward on the left side of the paper with respect to the tire equatorial plane CL and protrude downward on the right side of the paper. The curved grooves 16 have a groove width of 1.0 mm or greater and 3.0 mm or less and a groove depth of 3.0 mm or greater and 9.0 mm or less.

The first inclined grooves 18 communicate with both of the adjacent curved grooves 16 and extend substantially normal to the extending direction of the curved grooves 16 at the sections communicating with the curved grooves 16. The first inclined grooves 18 extending on both sides in the direction normal to the extending direction of each of the curved grooves 16 are positioned offset from each other in the extending direction of the curved groove 16. The inclined grooves 18 have a groove width of 1.0 mm or greater and 3.0 mm or less and a groove depth of 3.0 mm or greater and 9.0 mm or less.

The lug grooves 20 extend from the curved grooves 16 to the outside in the tire width direction and are curved while protruding toward the same side, in the tire circumferential direction, as the protrusions of the curved grooves 16 on the respective sides in the tire width direction with respect to the tire equatorial plane CL. The lug grooves 20 have a groove width of 3.0 mm or greater and 6.0 mm or less and a groove depth of 4.0 mm or greater and 12.0 mm or less.

The thin lug grooves 22 are formed between the adjacent lug grooves 20, extend substantially parallel to the lug grooves 20, and are narrower than the lug grooves 20. The thin lug grooves 22 have a groove width of 1.0 mm or greater and 3.0 mm or less and a groove depth of 1.0 mm or greater and 9.0 mm or less.

The second inclined grooves 24 communicate with both of the adjacent thin lug grooves 22 and extend substantially normal to the extending direction of the thin lug grooves 22 at the sections communicating with the thin lug grooves 22. The second inclined grooves 24 extending on both sides in the direction normal to the extending direction of each of the thin lug grooves 22 are positioned offset from each other in the extending direction of the thin lug groove 22. The second inclined grooves 24 have a groove width of 1.0 mm or greater and 3.0 mm or less and a groove depth of 1.0 mm or greater and 9.0 mm or less.

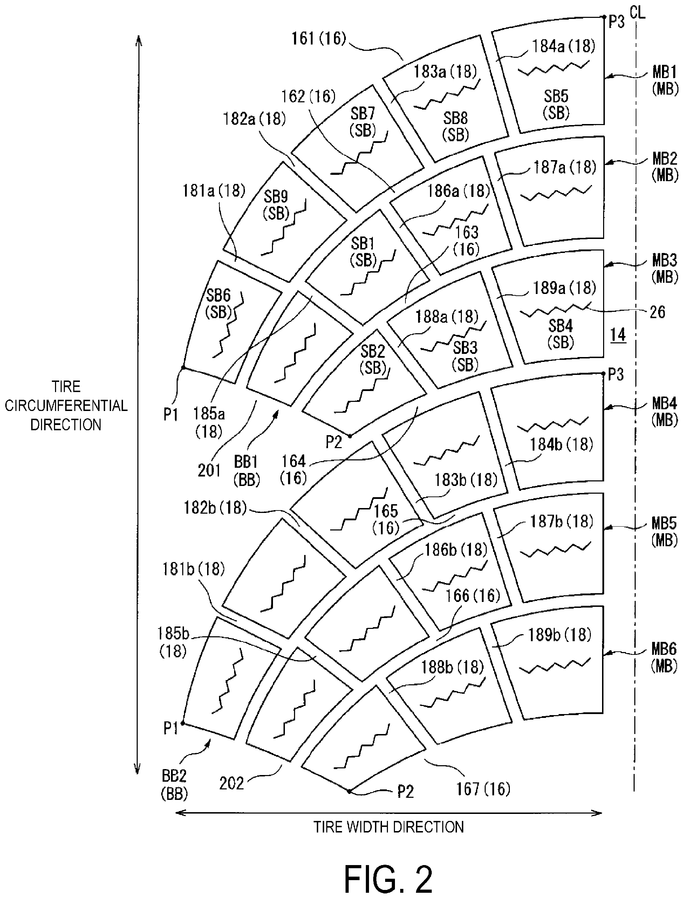

Based on the above-described premise, in the present embodiment, 24 small blocks SB are each defined with the contour thereof consisting of four line segments that are one-side edges (line segments) of four grooves consisting of any adjacent two of the curved grooves 16 (161 to 167) and any adjacent two of the circumferential main groove 14, the first inclined grooves 18 (181a to 189b), and the lug grooves 201, 202, as illustrated in FIG. 2 (a magnified plan view of a circled area X of the tread portion illustrated in FIG. 1). For example, the small block SB1 is defined by one-side edges (line segments) of four grooves consisting of the grooves 162, 163, 185a, 186a.

In the present embodiment, the small blocks SB may have any shape with the contour thereof consisting of four line segments. In other words, the four line segments (that is, one-side edges of four grooves) may be straight or curved.

In the present embodiment, the small blocks SB are arranged while curving in the tire width direction. This arrangement forms medium blocks MB1 to MB6 that are defined by the circumferential main groove 14, any adjacent two of the curved grooves 161 to 167, and one of the lug grooves 201, 202 and that are composed of the small blocks SB arranged while curving along the curved grooves 16.

The small blocks SB arranged while curving in the tire width direction indicate, for example, that the small blocks SB2, SB3, SB4 aligned in the tire width direction between the two adjacent curved grooves 163, 164 are arranged while curving along one-side edges of the curved grooves 163, 164, as illustrated in FIG. 2. Each of the edges constituting the small blocks SB and abutting on the curved grooves 16 (part of the edges of the curved grooves 16) may be straight or curved as described above, similar to other edges. A series of edges along a single curved groove 16 is curved while protruding toward one of the sides in the tire circumferential direction, as illustrated in FIG. 2.

The medium block MB1 (MB4) exemplified in FIG. 2 is composed of five small blocks SB defined between and along the curved grooves 161, 162 (164, 165). The medium block MB2 (MB5) is composed of four small blocks SB defined between and along the curved grooves 162, 163 (165, 166). The medium block MB3 (MB6) is composed of three small blocks SB defined between and along the curved grooves 163, 164 (166, 167).

In the present embodiment, the medium blocks MB are arranged in plural rows in the tire circumferential direction to form large blocks BB as illustrated in FIG. 2. In specific, the large block BB1 is composed of three medium blocks MB1, MB2, MB3 arranged in the tire circumferential direction. The large block BB2 is composed of three medium blocks MB4, MB5, MB6 arranged in the tire circumferential direction.

In the present embodiment, a plurality of large blocks BB (for example, BB1, BB2, BB3, BB4) are formed adjacent to the circumferential main groove 14 in the tire circumferential direction on both sides in the tire width direction across the circumferential main groove 14 as illustrated in FIG. 1. In the example in FIG. 1, the large blocks BB are formed over the entire circumference in the circumferential direction.

### Actions and the like

In the pneumatic tire according to the present embodiment, the small blocks SB are arranged in the tire width direction to form the medium blocks MB (MB1 to MB6), and the medium blocks MB are arranged in three rows in the tire circumferential direction to form the large blocks BB (BB1, BB2) as illustrated in FIG. 2.

First, concerning the medium blocks MB (MB1 to MB6), the edges, along the curved grooves 16, of the constituent small blocks SB positioned closer to the inside in the tire width direction contain tire width directional components in a larger amount, and the edges of the small blocks SB positioned closer to the outside in the tire width direction contain tire circumferential components in a larger amount. In contrast, the edges, along the first inclined grooves 18 (or the circumferential main groove 14, the lug grooves 201, 202), of the small blocks SB positioned closer to the inside in the tire width direction contain tire circumferential components in a larger amount, and the edges of the small blocks SB positioned closer to the outside in the tire width direction contain tire width directional components in a larger amount.

This configuration allows each of the small blocks SB to sufficiently contain a tire width directional component over the entire area in the tire width direction in the tread pattern fragmented by the small blocks SB as illustrated in FIG. 2. For example, concerning the medium block MB1 (composed of the small blocks SB5 to SB9), the edges, along the curved grooves 161, 162, of the small block SB5 positioned on the innermost side in the tire width direction contain tire width directional components in a large amount. The edges, along the first inclined groove 181a and the lug groove 201, of the small block SB6 positioned on the outermost side in the tire width direction contain tire width directional components in a large amount. The edges along the curved grooves 161, 162 and the edges along the first inclined groove 182a, 183a, of the small block SB7 at the center in the tire width direction contain tire width directional components in a well-balanced manner. The small block SB7 sufficiently thus contains a tire width directional component as a whole. The medium blocks MB2 to MB6 in FIG. 2 contain tire width directional components in the same manner as the above-described medium block MB1.

Consequently, if a load in the tire circumferential direction is applied to the tread surface 12 (for example, at the time of braking on an icy road surface), the example in FIG. 2 can exhibit drag force against external force in the tire circumferential direction with the small blocks SB that sufficiently contain tire width directional edge components over the entire area in the tire width direction. The pneumatic tire 1 according to the present embodiment can thus achieve excellent braking performance on ice.

Second, if a slip angle is formed (for example, at the time of turning on an icy road surface), it is important to utilize edges of land portions perpendicular to the vehicle traveling direction to enhance gripping force and to thereby prevent a skid on ice (Findings 1). It is also important to exhibit drag force against centrifugal force that acts in the direction perpendicular to the vehicle traveling direction and is applied to the tread surface 12 at the time of the turning described above (Findings 2).

In the light of Findings 1, in the present embodiment, the extending directions of the edges, along the curved grooves 16, of the small blocks SB composing the medium blocks MB (MB1 to MB6) gradually vary from the tire width direction for the small blocks SB on the inside in the tire width direction to the tire circumferential direction for the small blocks SB on the outside in the tire width direction.

For example, concerning the medium block MB1, if a slip angle is small (if the vehicle travels in the extending direction of the first inclined groove 184a), this configuration enables the edges, along the curved grooves 161, 162, of the small blocks SB5, SB8, which are perpendicular to the vehicle traveling direction, to exhibit gripping force and to thereby prevent a skid on ice.

If the slip angle gradually increases from this state, the vehicle traveling direction coincides with the extending directions of the first inclined groove 183a, the first inclined groove 182a, and the first inclined groove 181a in order. In these cases, the edges, along the curved grooves 161, 162, of the small blocks (SB8, SB7), the small blocks (SB7, SB9), and the small blocks (SB9, SB6) can also exhibit gripping force in order and thereby prevent a skid on ice. The other medium blocks MB2 to MB6 prevent a skid on ice in the same manner as the medium block MB1.

Consequently, the example in FIG. 2 copes with variations in the slip angle by substantially continuously utilizing the edges of the land portions perpendicular to the vehicle traveling direction over the entire range of assumed slip angles on an icy road surface to exhibit gripping force and to thereby prevent a skid on ice (Action 1).

In the light of Findings 2, in the present embodiment, the extending directions of the edges, along the first inclined grooves 18 (or the circumferential main groove 14, the lug grooves 201, 202), of the constituent small blocks SB gradually vary from the tire circumferential direction for the small blocks SB on the inside in the tire width direction to the tire width direction for the small blocks SB on the outside in the tire width direction.

For example, concerning the medium block MB1, if a slip angle is small (if the vehicle travels in the extending direction of the first inclined groove 184a), centrifugal force acts in the direction perpendicular to the extending direction of the first inclined groove 184a. If the vehicle turns circularly at a slip angle in this case, the edge, positioned on the outer side of the circle formed by the first inclined groove 184a in the turning, of the small block SB8 can exhibit drag force against the centrifugal force.

If the slip angle gradually increases from this state, the vehicle traveling direction coincides with the extending directions of the first inclined groove 183a, the first inclined groove 182a, and the first inclined groove 181a in order. In these cases, since centrifugal force acts in the direction perpendicular to the extending directions of the groove 183a, the groove 182a, and the groove 181a, the edges, positioned on the outer sides of the circles formed by the grooves 183a, 182a, 181a, of the small blocks SB7, SB9, SB6 can also exhibit drag force against the centrifugal force. The other medium blocks MB2 to MB6 exhibit drag force against centrifugal force in the same manner as the medium block MB1.

Consequently, the example in FIG. 2 copes with variations in the slip angle by substantially continuously utilizing the edges of the land portions extending in the vehicle traveling direction over the entire range of assumed slip angles on an icy road surface to exhibit drag force against centrifugal force (Action 2).

The pneumatic tire 1 having the above-described Action 1 and Action 2 according to the present embodiment can thus achieve excellent turning performance by a prevention of a skid at the time of turning on ice together with an exhibition of drag force against centrifugal force at the time of turning.

Each of the small blocks SB illustrated in FIG. 1 is anisotropic both in the tire circumferential direction and in the tire width direction. The anisotropic small block SB refers to a small block SB including at least one edge that is not parallel to any one of the tire circumferential direction and the tire width direction. In other words, the anisotropic small block SB indicates that at least one of the grooves defining the small block SB is inclined with respect to the tire circumferential direction and the tire width direction.

The tread pattern composed of a groove inclined with respect to the tire circumferential direction and the tire width direction can exhibit excellent water drainage performance. When the leading edge is on the upper side, on paper, of the tread pattern in FIG. 1 and the trailing edge is on the lower side, the curved grooves 16 and the lug grooves 20 mainly exhibit excellent water drainage performance, respectively, on the left and right sides on paper with respect to the tire equatorial plane CL. This is because considering the flow of water, it is advantageous that the leading edge contacting the ground first is on the inside in the tire width direction, which is the upstream of the water drainage passage, and that the trailing edge contacting the ground last is on the outside in the tire width direction, which is the downstream of the water drainage passage. The example in FIG. 2 can thus efficiently discharge water from the inside toward the outside in the tire width direction, thereby achieving excellent water drainage performance.

As described above, the pneumatic tire according to the present embodiment has improved shapes of large blocks composed of a plurality of small blocks in predetermined shapes. The pneumatic tire having this configuration according to the present embodiment (Basic Embodiment) can improve especially braking performance on ice, turning performance on ice, and water drainage performance in a well-balanced manner.

Although it is not illustrated in the drawings, the pneumatic tire according to the present embodiment described above has a meridian cross-section shape similar to that of a conventional pneumatic tire. Here, the meridian cross-section shape of the pneumatic tire refers to the shape of the pneumatic tire in a cross section taken along a plane normal to the tire equatorial plane CL. As seen in meridian cross-section, the pneumatic tire according to the present embodiment includes bead portions, sidewall portions, shoulder portions, and the tread portion from inside to outside in the radial direction of the tire. As seen, for example, in meridian cross-section, the pneumatic tire is provided with a carcass layer that extends from the tread portion to the bead portions on both sides and is wound around a pair of bead cores, and a belt layer and a belt reinforcing layer upon the carcass layers in that order outward in the radial direction of the tire.

The pneumatic tire according to the present embodiment can be obtained via ordinary manufacturing steps; i.e., a tire material mixing step, a tire material machining step, a green tire molding step, a vulcanization step, a post-vulcanization inspection step, etc. In particular, when manufacturing the pneumatic tire according to the present embodiment, recesses and protrusions corresponding to the tread pattern illustrated in FIG. 1 are formed on the inner wall of the vulcanization mold, which is used for vulcanization.

### Preferred Example of Basic Embodiment

As described above, in the example in FIG. 2, the first inclined grooves 18 extending on both sides in the direction normal to the extending direction of each of the curved grooves 16 are positioned offset from each other in the extending direction of the curved groove 16. Accordingly, the small blocks SB on both sides across the curved groove 16 are also positioned offset from each other in the extending direction of the curved groove 16. If a slip angle is formed and a load is thus locally applied in the direction normal to the extending direction of the curved groove 16, the small blocks SB positioned across the curved groove 16 contact each other. In this case, one small block SB contacts two small blocks SB across the curved groove 16.

Concerning the large block BB1 illustrated in FIG. 2, if a slip angle is formed and a load is thus applied, for example, in the directions normal to the extending directions of the curved grooves 163, 162 in the vicinity of the small block SB1, the small block SB1 contacts the two small blocks SB7, SB9 or the two small blocks SB2, SB3. The single small block SB can be thus supported by the two small blocks SB, resulting in enhanced rigidity of the large block BB1 as a whole. This configuration can improve especially braking performance and turning performance on ice.

In the example in FIG. 2, the angle formed between the circumferential main groove 14 and the lug groove 201 (202) should be 40° or greater and 160° or less. In the calculation of the above-described angle, the extending direction of the lug groove 201 (202) coincides with the extending direction of the line segment connecting one end P1 and the other end P2, in the tire circumferential direction, of the small blocks SB defined by the lug groove 201 (202).

The angle being 40° or greater and 160° or less enables the large blocks BB1, BB2 to securely support each other if external force is applied in the tire circumferential direction. This configuration can enhance rigidity of the large blocks BB formed in the tire circumferential direction as a whole and can thus improve especially steering stability on ice.

### Additional Embodiments

Next, descriptions are made of Additional Embodiments 1 to 5 which can be optionally implemented as opposed to Basic Embodiment of the pneumatic tire according to the present invention described above.

### Additional Embodiment 1

In Basic Embodiment, the curved grooves 16 communicating with the circumferential main groove 14, curved in the tire width direction, and defining the small blocks SB are preferably disposed at a density of 0.04 grooves/mm or greater and 0.3 grooves/mm or less, as illustrated in FIG. 1 (Additional Embodiment 1).

The disposal density of the curved grooves 16 refers to the number of curved grooves 16 disposed per unit length on the normals at the intermediate points of the longest curved grooves 161, 164 defining the large blocks BB (BB1, BB2) illustrated in FIG. 2. The disposal density of the curved grooves 16 relates to the curved grooves 16 defining one of the large blocks BB. The density of the curved grooves 16 defining the other large blocks BB should be separately measured because they have different longest curved grooves to be used as references.

The curved grooves 16 having a disposal density of 0.04 grooves/mm or greater can prevent the small blocks SB from having excessively short edges along the curved grooves 16 in comparison with the edges along the first inclined grooves 18 (or the circumferential main groove 14, the lug grooves 201, 202). This configuration prevents the small blocks SB from falling in the extending directions of the curved grooves 16 due to centrifugal force and thus sufficiently exhibits drag force against centrifugal force in turning, resulting in an improvement in turning performance on ice.

The curved grooves 16 having a disposal density of 0.3 grooves/mm or less allows the small blocks SB to have sufficiently long edges along the first inclined grooves 18. This configuration prevents the small blocks SB from falling in the tire circumferential direction in braking on the inside in the tire width direction of the large blocks BB1, BB2 illustrated in FIG. 2 and prevents the small blocks SB from falling in the extending directions of the curved grooves 16 in turning on the outside in the tire width direction of the large blocks BB1, BB2. Consequently, braking performance on ice and turning performance on ice are improved.

### Additional Embodiment 2

In Basic Embodiment and Basic Embodiment with Additional Embodiment 1 incorporated thereinto, each of the small blocks SB preferably has an area of 15 mm² or greater and 250 mm² or less, as illustrated in FIG. 1 (Additional Embodiment 2).

The small blocks SB having an area of 15 mm² or greater can enhance rigidity of the small blocks SB and thus improve steering stability.

The small blocks SB having an area of 250 mm² or less allow the total length of the edges of the small blocks SB included in each of the large blocks BB to be sufficiently long and thus improve braking performance on ice and turning performance on ice. The small blocks SB in the present embodiment include not only the small blocks SBa, illustrated in FIG. 1, composing the large blocks BB1, BB2 but also the small blocks SBb, illustrated in FIG. 1, positioned between the adjacent lug grooves 20 and defined by at least the second inclined grooves 24.

### Additional Embodiment 3

In Basic Embodiment and Basic Embodiment with at least one of Additional Embodiments 1, 2 incorporated thereinto, the large blocks BB are preferably positioned alternately across the circumferential main groove 14 in the tire circumferential direction, as illustrated in FIG. 1 (Additional Embodiment 3).

The position of each of the large blocks BB in the circumferential direction refers to an intermediate position between one end and the other end in the tire circumferential direction. For example, the position of the large block BB1 in the circumferential direction illustrated in FIG. 2 refers to an intermediate position between one end P2 and the other end P3 in the tire circumferential direction.

The large blocks BB positioned alternately across the circumferential main groove 14 in the tire circumferential direction enable, for example, the curved grooves (such as the grooves 161, 164, 167 in FIG. 2) defining the outer peripheries of the large blocks BB (BB1, BB2, BB3, BB4, etc.) and having relatively wide groove widths, among the curved grooves 16 in FIG. 1 to be positioned offset by a half cycle across the circumferential main groove 14 in the tire circumferential direction. This configuration forms the curved grooves having relatively wide groove widths, which readily affect water drainage performance, on both sides in the tire width direction across the circumferential grooves 14 at close intervals in the tire circumferential direction. Consequently, water drainage performance can be exhibited more stably, resulting in more efficient draining of water.

### Additional Embodiment 4

In Basic Embodiment and Basic Embodiment with at least one of Additional Embodiments 1 to 3 incorporated thereinto, the rotational direction of the tire is preferably designated (Additional Embodiment 4).

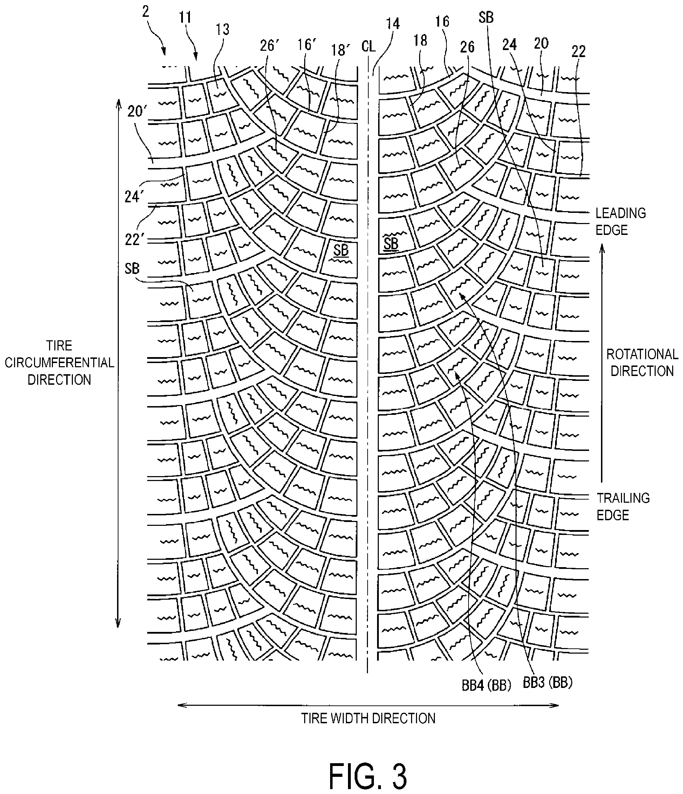

FIG. 3 is a plan view of a tread portion of a pneumatic tire according to an embodiment of the present invention (a view of a tire contacting the ground seen from above). The same components have the same reference characters in FIG. 3 and FIG. 1. As in FIG. 1, the tread pattern exemplified in FIG. 3 extends between both ground contact edges (not illustrated).

The tread portion 11 of the pneumatic tire 2 is formed from a rubber material (tread rubber) and is exposed on the outermost side in the tire radial direction of the pneumatic tire 2, and the surface thereof constitutes the contour of the pneumatic tire 2. The surface of the tread portion 11 forms a tread surface 13 constituting the surface that contacts the road surface when a vehicle (not illustrated) upon which the pneumatic tire 2 is mounted is traveling.

When the rotational direction is designated, for example, when the leading edge is on the upper side, on paper, in FIG. 3 and the trailing edge is on the lower side, lug grooves 20, 20' having the widest groove width among grooves other than a circumferential main groove 14 exhibit excellent water drainage performance. This is because considering the flow of water, it is advantageous that the leading edge contacting the ground first is on the inside in the tire width direction, which is the upstream of the water drainage passage, and that the trailing edge contacting the ground last is on the outside in the tire width direction, which is the downstream of the water drainage passage. The example in FIG. 3 can thus more efficiently discharge water from the inside toward the outside in the tire width direction, thereby achieving excellent water drainage performance.

With the rotational direction designated as illustrated in FIG. 3, a load is applied from the lower side, on paper, in FIG. 3 to the upper side on the tread surface 13 in braking. In this case, each of large blocks BB deforms from the trailing edge side toward the leading edge side, such that concerning the adjacent large blocks in the tire circumferential direction, the large block on the leading edge side supports the large block on the trailing edge side. In specific, the large block BB3 on the leading edge side in FIG. 3 supports the large block BB4 on the trailing edge side.

Generally, when land portions contact and support each other, it is more advantageous that the land portion having a relatively large surface containing a contact region supports the land portion having a relatively small surface containing a contact region than the opposite case, in terms of efficient stress distribution. In the light of such findings, in the present embodiment, the rotational direction is designated such that, for example, the large block BB3 having a relatively large surface containing a contact region, illustrated in FIG. 3, supports the large block BB4 having a relatively small surface containing a contact region in braking. Consequently, braking performance on ice is further improved.

### Additional Embodiment 5

In Basic Embodiment and Basic Embodiment with at least one of Additional Embodiments 1 to 4 incorporated thereinto, at least one sipe 26, 26' is preferably formed on at least one of the small blocks SB, as illustrated in FIGS. 1, 3 (Additional Embodiment 5). Here, the sipe refers to a groove having a groove width of 0.4 mm or greater and less than 1.0 mm.

Forming at least one sipe 26 on at least one of the small blocks SB allows the large blocks BB composed of the small blocks SB to have more edges. If the edge formed by the sipe 26 contains a tire circumferential component in a large amount accordingly, drag force against external force in the tire width direction is further enhanced, resulting in a significant improvement in turning performance on ice. If the edge formed by the sipe 26 contains a tire width directional component in a large amount accordingly, drag force against external force in the tire circumferential direction is further enhanced, resulting in a significant improvement in braking performance on ice.

### Examples

Pneumatic tires were manufactured that had a size of 195/65R15, any of the tread patterns in FIGS. 1, 3, and configurations in Working Examples 1 to 6 under the following conditions (1) to (9) shown in Table 1:
(1) whether a plurality of large blocks were formed adjacent to a circumferential main groove in the tire circumferential direction on both sides in the tire width direction across the circumferential main groove (formation of large blocks in tire circumferential direction);
(2) a disposal density of curved grooves;
(3) an area of each small block;
(4) positions of large blocks across the circumferential main groove in the tire circumferential direction;
(5) rotation direction designation; and
(6) whether at least one sipe was formed on a small block (presence of sipes). The rotational direction of the tire is not designated in the example in FIG. 1 and is designated in the example in FIG. 3.

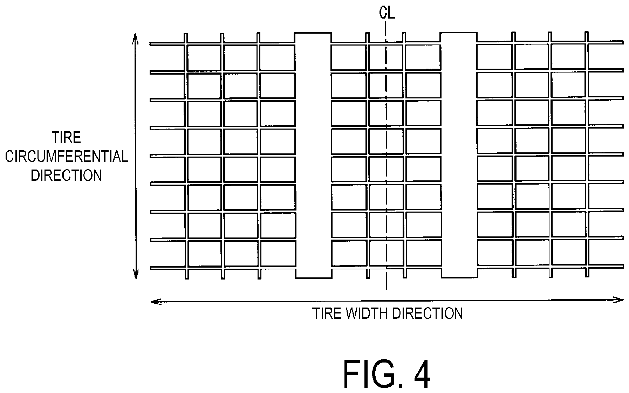

A conventional pneumatic tire was manufactured that had a size of 195/65R15 and a tread pattern in FIG. 4. The tread pattern exemplified in FIG. 4 extends between both ground contact edges (not illustrated).

The test tires thus manufactured for Working Examples 1 to 6 and Conventional Example were mounted on 15x6J rims at an air pressure of 220 kPa to be fitted to a sedan type passenger vehicle with an engine displacement of 1500 CC. Evaluation was carried out of braking performance on ice, turning performance on ice, and water drainage performance. The results are shown on Table 1.

### Braking performance on ice

On an ice road surface, the braking distance was measured from a condition when the vehicle was traveling at 40 km/hour, and an index evaluation was carried out with the Conventional Example as the reference (100). In the evaluation, a larger index value indicates superior braking performance on ice.

### Turning performance on ice

The lap time when the vehicle turned on an ice road surface with a lap length of 6 m was measured, and an index evaluation was carried out with the Conventional Example as the reference (100). In the evaluation, a larger index value indicates superior turning performance on ice.

### Water drainage performance

The speed when the tires lost gripping force and spun while the vehicle accelerated on a wet road surface with a water depth of 5 mm from a stopping condition was measured, and an index evaluation was carried out with the Conventional Example as the reference (100). In the evaluation, a larger index value indicates superior water drainage performance.

**[Table 1]**

| Condition No. | | Conventional Example | Working Example 1 | Working Example 2 | Working Example 3 | Working Example 4 | Working Example 5 | Working Example 6 |
|---|---|---|---|---|---|---|---|---|
| | Tread Pattern | FIG. 4 | FIG. 1 | FIG. 1 | FIG. 1 | FIG. 1 | FIG. 3 | FIG. 3 |
| 1 | Formation of large blocks in tire circumferential direction | - | Formed over the entire circumference in the circumferential direction | Formed over the entire circumference in the circumferential direction | Formed over the entire circumference in the circumferential direction | Formed over the entire circumference in the circumferential direction | Formed over the entire circumference in the circumferential direction | Formed over the entire circumference in the circumferential direction |
| 2 | Disposal density of curved grooves (grooves/m m) | - | 0.35 | 0.2 | 0.2 | 0.2 | 0.2 | 0.2 |
| 3 | Area of each small block (mm²) | - | 10 | 10 | 100 | 100 | 100 | 100 |
| 4 | Positions of large blocks across circumferential main groove in tire circumferential direction | - | Same | Same | Same | Alternating | Alternating | Alternating |
| 5 | Rotational direction designation | No | No | No | No | No | Present | Present |
| 6 | Presence of sipes | No | No | No | No | No | No | Present |
| Evaluated Item | Braking performance on ice | 100 | 110 | 115 | 120 | 130 | 140 | 150 |
| | Turning performance on ice | 100 | 110 | 115 | 120 | 130 | 140 | 150 |
| | Water drainage performance | 100 | 105 | 110 | 120 | 120 | 140 | 140 |

According to Table 1, it can be seen that with the pneumatic tires according to Working Examples 1 to 6 that complied with the technical scope of the present invention (that have improved shapes of large blocks composed of a plurality of small blocks in predetermined shapes), braking performance on ice, turning performance on ice, and water drainage performance are improved in a well-balanced manner in each case compared with the pneumatic tire according to the Conventional Example, which did not comply with the technical scope of the present invention.

### Reference Signs List

1, 2 Pneumatic tire
10, 11 Tread portion
12, 13 Tread surface
14 Circumferential main groove
16, 16' Curved groove
18, 18' First inclined groove
20, 20' Lug groove
22, 22' Thin lug groove
24, 24' Second inclined groove
26, 26' Sipe
BB Large block
MB Medium block
SB Small block
CLTire equatorial plane
X Circled area

## Claims

1. A pneumatic tire (1, 2) provided with a circumferential main groove (14), comprising:
a plurality of small blocks (SB) each having a contour consisting of four line segments;
medium blocks (MB) composed of the small blocks (SB) arranged while curving in a tire width direction; and
large blocks (LB) composed of the medium blocks (MB) arranged in a plurality of rows in a tire circumferential direction;
the large blocks (LB) being formed adjacent to the circumferential main groove (14) in the tire circumferential direction on both sides in the tire width direction across the circumferential main groove (14), wherein
each of the small blocks (SB) has an area of 15 mm² or greater and 250 mm² or less.

2. The pneumatic tire (1, 2) according to claim 1, wherein
curved grooves (16, 16') communicating with the circumferential main groove (14), curved in the tire width direction, and defining the small blocks (SB) are disposed at a density of 0.04 grooves/mm or greater and 0.3 grooves/mm or less.

3. The pneumatic tire (1, 2) according to claim 1 or 2, wherein
the large blocks (LB) are positioned alternately across the circumferential main groove (14) in the tire circumferential direction.

4. The pneumatic tire (1, 2) according to any one of claims 1 to 3, wherein
a rotational direction of the tire is designated.

5. The pneumatic tire (1, 2) according to any one of claims 1 to 4, wherein
at least one sipe (26, 26') is formed on at least one of the small blocks (SB).

## Patentansprüche

1. Luftreifen (1, 2), bereitgestellt mit einer Hauptumfangsrille (14), umfassend:
eine Vielzahl von kleinen Blöcken (SB) mit jeweils einer Kontur, bestehend aus vier Liniensegmenten;
mittlere Blöcke (MB), die sich aus den kleinen Blöcken (SB) zusammensetzen, die angeordnet sind, während sie sich in einer Reifenbreitrichtung krümmen; und
große Blöcke (LB), die sich aus den mittleren Blöcken (MB) zusammensetzen, die in einer Vielzahl von Reihen in einer Reifenumfangsrichtung angeordnet sind;
wobei die großen Blöcke (LB) angrenzend an die Hauptumfangsrille (14) in der Reifenumfangsrichtung auf beiden Seiten in der Reifenbreitenrichtung über der Hauptumfangsrille (14) gebildet sind, wobei jeder der kleinen Blöcke (SB) eine Fläche von 15 mm² oder größer und 250 mm² oder weniger aufweist.

2. Luftreifen (1, 2) nach Anspruch 1, wobei
gekrümmte Rillen (16, 16'), die mit der in der Reifenbreitenrichtung gekrümmten Hauptumfangsrille (14) kommunizieren und die kleinen Blöcke (SB) definieren, in einer Dichte von 0,04 Rillen/mm oder mehr und 0,3 Rillen/mm oder weniger angebracht sind.

3. Luftreifen (1, 2) nach Anspruch 1 oder 2, wobei
die großen Blöcke (LB) abwechselnd über der Hauptumfangsrille (14) in der Reifenumfangsrichtung positioniert sind.

4. Luftreifen (1, 2) nach einem der Ansprüche 1 bis 3, wobei eine Drehrichtung des Reifens festgelegt ist.

5. Luftreifen (1, 2) nach einem der Ansprüche 1 bis 4, wobei mindestens eine Lamelle (26, 26') auf mindestens einem der kleinen Blöcke (SB) gebildet ist.

## Revendications

1. Pneumatique (1, 2) pourvu d'une rainure circonférentielle principale (14), comprenant :
une pluralité de petits blocs (SB) ayant chacun un contour constitué de quatre segments de ligne ;
des blocs moyens (MB) composés des petits blocs (SB) agencés tout en s'incurvant dans une direction de largeur du pneu ; et
des grands blocs (LB) composés des blocs moyens (MB) agencés en une pluralité de rangées dans une direction circonférentielle du pneu ;
les grands blocs (LB) étant formés adjacents à la rainure circonférentielle principale (14) dans la direction circonférentielle du pneu de chaque côté dans la direction de largeur du pneu à travers la rainure circonférentielle principale (14), dans lequel chacun des petits blocs (SB) a une aire de 15 mm² ou plus et de 250 mm² ou moins.

2. Pneumatique (1, 2) selon la revendication 1, dans lequel
des rainures incurvées (16, 16') communiquant avec la rainure circonférentielle principale (14), incurvées dans la direction de largeur du pneu et définissant les petits blocs (SB), sont disposées à une densité de 0,04 rainure/mm ou plus et de 0,3 rainure/mm ou moins.

3. Pneumatique (1, 2) selon la revendication 1 ou 2, dans lequel
les grands blocs (LB) sont positionnés en alternance à travers la rainure circonférentielle principale (14) dans la direction circonférentielle du pneu.

4. Pneumatique (1, 2) selon l'une quelconque des revendications 1 à 3, dans lequel une direction de rotation du pneu est désignée.

5. Pneumatique (1, 2) selon l'une quelconque des revendications 1 à 4, dans lequel au moins une lamelle (26, 26') est formée sur au moins l'un des petits blocs (SB).
